# EUROPEAN PATENT APPLICATION

(11) **EP 3 444 876 A1**
(43) Date of publication of application: **20.02.2019**
(21) Application number: 17781784.8
(22) Date of filing: 23.03.2017
(51) Int. Cl.: H01M 4/36, H01M 4/38, H01M 4/62, H01M 10/0525, H01M 4/134

(54) **SILICON NEGATIVE ELECTRODE MATERIAL, PREPARATION METHOD THEREFOR, NEGATIVE ELECTRODE PLATE, AND LITHIUM-ION BATTERY**

(30) Priority: 15.04.2016 CN 201610235643
(71) Applicant: Huawei Technologies Co., Ltd., Longgang District Shenzhen, Guangdong 518129 (CN)
(72) Inventor: XIA, Shengan, Shenzhen Guangdong 518129 (CN); LI, Hui, Shenzhen Guangdong 518129 (CN); WANG, Pinghua, Shenzhen Guangdong 518129 (CN)
(74) Representative: Pfenning, Meinig & Partner mbB
(86) International application number: PCT/CN2017/077784
(87) International publication number: WO 2017/177808

(57) **Abstract**

This application provides a silicon negative material, a silicon negative material preparation method, a negative electrode plate, and a lithium-ion battery. The silicon negative material includes a silicon core, and a buffer coating layer and a first coating layer that are coated on a surface of the silicon core, where the first coating layer is a coating layer including a carbon material, and the carbon material includes at least one of the following doping elements: N, P, B, S, O, F, Cl, or H. In embodiments of this application, fast charging performance of the silicon negative material when being used as a negative electrode of a battery is improved.

## Description

This application claims priority to Chinese Patent Application No. 201610235643.3, filed with the Chinese Patent Office on April 15, 2016 and entitled "SILICON NEGATIVE MATERIAL, SILICON NEGATIVE MATERIAL PREPARATION METHOD, NEGATIVE ELECTRODE PLATE, AND LITHIUM-ION BATTERY", which is incorporated herein by reference in its entirety.

### TECHNICAL FIELD

This application relates to the field of lithium-ion batteries, and more specifically, to a silicon negative material, a silicon negative material preparation method, a negative electrode plate, and a lithium-ion battery.

### BACKGROUND

A lithium-ion graphite negative material has multiple advantages such as a long cycle life, high first-time efficiency, low costs, environment-friendliness, and easy preparation. Therefore, the material has been widely applied in portable electronic devices, electric vehicles, and the energy storage field. However, the graphite has a relatively low theoretical capacity (approximately 372 mAh/g), low compatibility with an electrolyte solution, and poor rate performance. However, a silicon material becomes a new most promising and highly efficient lithium storage negative material because of a relatively high theoretical capacity (4200 mAh/g) and a good intercalation/deintercalation capability. However, a volume change of the silicon material is more than 300% during lithium-ion intercalation/deintercalation, a relatively great mechanical stress is generated when the volume changes, and therefore, the silicon material easily falls off a negative current collector, and such a volume change characteristic greatly limits application of the silicon material. Chinese Patent 1 (201210334388.X) discloses a method for preparing a negative electrode of a lithium-ion battery of a core-shell structure by using a polyaniline/silicon composite material. The composite material has a dual-layer core-shell structure, and a core material is nano-silicon. The first-layer materials of the core-shell are copper and carbon, and the second-layer material of the core-shell is polyaniline. There is a hollow buffer volume between the first-layer materials of the core-shell and the second-layer material of the core-shell. The composite material buffers the volume change of the silicon material in a charging or discharging process by using the hollow buffer volume between the first-layer materials of the core-shell and the second-layer material of the core-shell. However, preparation of the composite material is complex, and the composite material does not have a fast charging capability.

### SUMMARY

This application provides a silicon negative material, a silicon negative material preparation method, a negative electrode plate, and a lithium-ion battery, so as to improve fast charging performance of the silicon negative material when being used as a negative electrode of a battery.

According to a first aspect, a silicon negative material is provided, and the silicon negative material includes a silicon core, and a buffer coating layer and a first coating layer that are coated on a surface of the silicon core, where the first coating layer is a coating layer including a carbon material, and the carbon material includes at least one of the following doping elements: N, P, B, S, O, F, Cl, or H.

By doping the surface of the silicon core with the carbon material and by using the doping element in the carbon material to form lattice defects at a carbon layer, fluidity of electrons in an electron cloud is improved, a barrier for lithium storage reaction is lowered, a quantity of binding sites for lithium storage increases, a lithium-ion migration velocity is greatly improved, and lithium storage space and a quantity of channels increase, thereby improving fast charging performance of the silicon negative material when being used as a negative electrode of a battery.

With reference to the first aspect, it should be noted that, the buffer coating layer is a coating layer including an amorphous carbon material, and a mass of the amorphous carbon material is 0.1% to 50% of a mass of the silicon negative material, and further, a mass of the amorphous carbon material is 0.5% to 10% of a mass of the silicon negative material. Optionally, a mass of the amorphous carbon material may be 30%, 15%, 8%, or 5% of a mass of the silicon negative material. Optionally, the buffer coating layer may be a coating layer including polypyrrole and/or polythiophene.

With reference to the first aspect, in the silicon negative material, a mass of the carbon material is 0.1% to 50% of the mass of the silicon negative material, and further, a mass of the carbon material is 1% to 10% of the mass of the silicon negative material, and a mass of the doping element in the carbon material is 0.1% to 10% of the mass of the silicon negative material. Optionally, a mass of the carbon material may be 32%, 14%, 7%, or 4% of the mass of the silicon negative material, and a mass of the doping element in the carbon material may be 2%, 5%, or 7% of the mass of the silicon negative material.

With reference to the first aspect, when the buffer coating layer is a coating layer including the amorphous carbon material, the amorphous carbon material and the carbon material form a dual-layer coating structure on the surface of the silicon core, and the dual-layer coating structure specifically comes in two forms: In the first form, the amorphous carbon material is at an internal layer of the dual-layer coating structure, and the carbon material is at an external layer of the dual-layer coating structure; and in the second form, the carbon material is at an internal layer of the dual-layer coating structure, and the amorphous carbon material is at an external layer of the dual-layer coating structure.

With reference to the first aspect, when the buffer coating layer is the coating layer including the amorphous carbon material, a thickness of a coating layer that includes the amorphous carbon material and the carbon material and that is formed on the surface of the silicon core is from 0.1 to 10 microns.

With reference to the first aspect, when the buffer coating layer is the coating layer including the amorphous carbon material, the amorphous carbon material is obtained by treating at least one of asphalt, epoxy resin, or phenolic resin.

With reference to the first aspect, the silicon core in the silicon negative material includes at least one of pure silicon, a silicon oxide composite material, a silicon-carbon composite material, or a heteroatom-doped silicon material, and the heteroatom-doped silicon material includes at least one of the following atoms: N, P, S, B, O, F, or Cl. It should be understood that the heteroatom-doped silicon material is obtained by doping the silicon material with at least one of the following atoms: N, P, S, B, O, F, or Cl.

According to a second aspect, a silicon negative material preparation method is provided, and the method includes: mixing a silicon core material with an amorphous carbon material, pumping a protective gas in, and performing coating and carbonization treatments on a mixture at 400°C to 1500°C, so as to obtain a material coated with the amorphous carbon material; and mixing a carbon material with the material coated with the amorphous carbon material, pumping the protective gas in, performing a sintering treatment on a mixture, and then preserving a temperature of 500°C to 1200°C for 1 to 12 hours, so as to obtain a silicon negative material whose internal layer is coated with the amorphous carbon material and whose external layer is coated with the carbon material, where the carbon material includes at least one of the following doping elements: N, P, B, S, O, F, Cl, or H.

In the second aspect, the protective gas includes an inert gas and a nitrogen gas.

With reference to the second aspect, optionally, a gas mixture including methane, a hydride gas, and an inert gas may be pumped in, and the material coated with the amorphous carbon material is heated, so as to obtain the silicon negative material whose internal layer is coated with the amorphous carbon material and whose external layer is coated with the carbon material, where the hydride gas is a gas including the doping element in the carbon material.

Optionally, a velocity of pumping the gas mixture including the methane, the hydride gas, and the inert gas is from 5 ml/min to 300 ml/min, and a volume ratio of the hydride gas to the inert gas is from 0:1 to 1:10. Optionally, the hydride gas is hydrazine (N₂H₄).

According to a third aspect, a silicon negative material preparation method is provided, and the method includes: mixing a silicon core material with a carbon material, performing a sintering treatment on a mixture, pumping a protective gas in, and preserving a temperature of 500°C to 1200°C for 1 to 12 hours, so as to obtain a material coated with the carbon material, where the carbon material includes at least one of the following doping elements: N, P, B, S, O, F, Cl, or H; and mixing the material coated with the carbon material with an amorphous carbon material, pumping the protective gas in, and performing coating and carbonization treatments on a mixture at 400°C to 1500°C, so as to obtain a silicon negative material whose internal layer is coated with the carbon material and whose external layer is coated with the amorphous carbon material.

In the third aspect, the protective gas includes an inert gas and a nitrogen gas.

With reference to the third aspect, optionally, a gas mixture of methane, a hydride gas, and an inert gas may be pumped in, and the silicon core material is heated, so as to obtain the material coated with the carbon material, where the hydride gas is a gas including the doping element in the carbon material.

Optionally, a velocity of pumping the gas mixture including the methane, the hydride gas, and the inert gas is from 5 ml/min to 300 ml/min, and a volume ratio of the hydride gas to the inert gas is from 0:1 to 1:10. Optionally, the hydride gas is hydrazine (N₂H₄).

According to a fourth aspect, a negative electrode plate is provided, and the negative electrode plate includes a current collector and the silicon negative material that is coated on the current collector and that is provided in the first aspect.

According to a fifth aspect, a lithium-ion battery is provided, and the lithium-ion battery includes a negative electrode plate, a positive electrode plate, a diaphragm, a non-aqueous electrolyte solution, and a shell, where the negative electrode plate includes a current collector and the silicon negative material that is coated on the current collector and that is provided in the first aspect.

In this application, by doping the surface of the silicon core with the carbon material and by using the doping element in the carbon material to form lattice defects at the carbon layer, the fast charging performance of the silicon negative material when being used as the negative electrode of the battery is improved.

### BRIEF DESCRIPTION OF DRAWINGS

FIG. 1 is a schematic structural diagram of a silicon negative material according to an embodiment of this application; and
FIG. 2 is a schematic structural diagram of a silicon negative material according to an embodiment of this application.

### DESCRIPTION OF EMBODIMENTS

The following describes the technical solutions in the embodiments of this application with reference to the accompanying drawings in the embodiments of this application.

In the prior art, preparing a silicon negative material based on a silicon material resolves, to some extent, a problem that a volume of the silicon material greatly changes in a charging or discharging process of a battery. However, fast charging performance of the existing silicon negative material is relatively poor. Therefore, the embodiments of this application propose that the silicon material is used as a core and a dual-layer coating structure (a buffer coating layer and a first coating layer, where the first coating layer includes a doping element) is provided on a surface of the silicon material core. In this way, a problem that the volume of the silicon material greatly changes when being used as a negative electrode of the battery is resolved by using the buffer coating layer; and by using the doping element at the first coating layer to form lattice defects at a carbon layer, fluidity of electrons in an electron cloud is improved, a barrier for lithium storage reaction is lowered, a quantity of binding sites for lithium storage increases, lithium storage space and a quantity of transmission channels greatly increase, and a lithium-ion migration velocity is improved, thereby improving fast charging performance of the silicon negative material when being used as the negative electrode of the battery.

An embodiment of this application provides a silicon negative material, and the silicon negative material includes a silicon core, and a buffer coating layer and a first coating layer that are coated on a surface of the silicon core, where the first coating layer is a coating layer including a carbon material, and the carbon material includes at least one of the following doping elements: N, P, B, S, O, F, Cl, or H.

In this embodiment of this application, by doping the surface of the silicon core with the carbon material and by using the doping element in the carbon material to form lattice defects at a carbon layer, fluidity of electrons in an electron cloud is improved, a barrier for lithium storage reaction is lowered, a quantity of binding sites for lithium storage increases, a lithium-ion migration velocity is greatly improved, and lithium storage space and a quantity of channels increase, thereby improving fast charging performance of the silicon negative material when being used as a negative electrode of a battery.

Optionally, in an embodiment, the buffer coating layer in the silicon negative material may be an amorphous carbon material that is coated on the surface of the silicon core, or may be another buffer material that is coated on the surface of the silicon core. For example, the buffer coating layer may be a coating layer including conductive polymer materials such as polypyrrole and polythiophene. By coating the surface of the silicon core with a buffer material, a change of a volume of the silicon core in a charging or discharging process is buffered, thereby resolving a problem that a volume of a silicon core material used as the negative electrode of the battery greatly changes in the charging or discharging process and improving reliability and a service life of the silicon negative material.

Optionally, in an embodiment, the buffer coating layer and the first coating layer form a dual-layer coating structure on the surface of the silicon core, and the buffer coating layer may be an external layer of the dual-layer coating structure, or may be an internal layer of the dual-layer coating structure. Specifically, when the buffer coating layer is a coating layer including the amorphous carbon material and the first coating layer is a coating layer including the carbon material, the dual-layer coating structure specifically comes in two forms: In the first form, the amorphous carbon material is at the internal layer of the dual-layer coating structure, and the carbon material is at the external layer of the dual-layer coating structure; and in the second form, the carbon material is at the internal layer of the dual-layer coating structure, and the amorphous carbon material is at the external layer of the dual-layer coating structure.

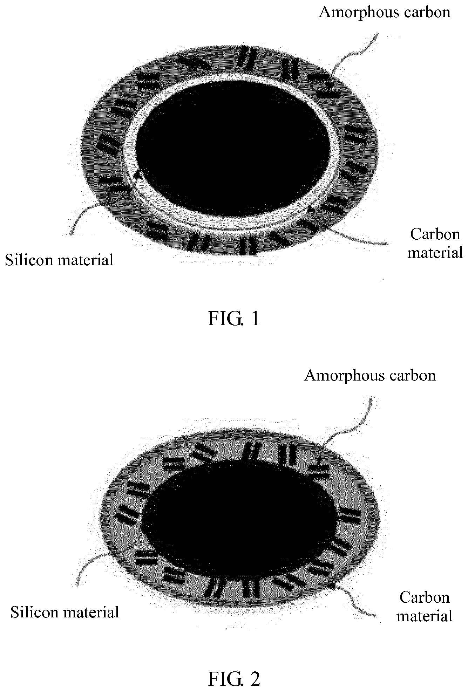

Specifically, as shown in FIG. 1, a silicon material is included in the silicon negative material; and there are two coating layers on a surface of the silicon material, an internal layer is an amorphous carbon coating layer, and an external layer is a carbon material coating layer. A structure shown in FIG. 2 is opposite to that shown in FIG. 1. In FIG. 2, an internal layer is a carbon material coating layer, and an external layer is an amorphous carbon coating layer.

Optionally, in an embodiment, the amorphous carbon material may be obtained by treating at least one of asphalt, epoxy resin, or phenolic resin.

Optionally, in an embodiment, a mass of the amorphous carbon material is 0.1% to 50% of a mass of the silicon negative material, and further, a mass of the amorphous carbon material is 0.5% to 10% of a mass of the silicon negative material. Optionally, a mass of the amorphous carbon material may be 30%, 15%, 8%, or 5% of a mass of the silicon negative material.

Optionally, in an embodiment, the silicon core may be at least one of pure silicon, a silicon oxide composite material, a silicon-carbon composite material, or a heteroatom-doped silicon material.

Optionally, in an embodiment, a mass of the carbon material at the first coating layer is 0.1% to 50% of the mass of the silicon negative material, and further, a mass of the doping element in the carbon material is 0.1% to 10% of the mass of the silicon negative material. Optionally, a mass of the carbon material may be 32%, 14%, 7%, or 4% of the mass of the silicon negative material, and a mass of the doping element in the carbon material may be 2%, 5%, or 7% of the mass of the silicon negative material.

Optionally, in an embodiment, when the buffer coating layer in the silicon negative material includes the amorphous carbon material, a thickness of a coating layer that includes the amorphous carbon material and the carbon material and that is formed on the surface of the silicon core is from 0.1 to 10 microns.

The foregoing has described the silicon negative material in this embodiment of this application, and the following uses a buffer coating layer including amorphous carbon and a first coating layer including a carbon material as an example to describe in detail a silicon negative material preparation method in this embodiment of this application.

Silicon negative materials may be classified into two types according to a location relationship between two coating layers in the silicon negative materials: In the first type, the amorphous carbon material is at an internal layer of a dual-layer coating structure, and the carbon material is at an external layer of the dual-layer coating structure; and in the second type, the carbon material is at the internal layer of the dual-layer coating structure, and the amorphous carbon material is at the external layer of the dual-layer coating structure. The following first describes a method for preparing a first silicon negative material. Specific steps are as follows:

110. Mix a silicon core material with an amorphous carbon material, pump a protective gas in, and perform coating and carbonization treatments on a mixture at 400°C to 1500°C, so as to obtain a material coated with the amorphous carbon material.

120. Mix the carbon material with the material that is obtained in step 110 and that is coated with the amorphous carbon, and perform a coating treatment on a mixture by using the carbon material.

Specifically, step 120 may be specifically implemented in two manners:
(1) Mix the carbon material with the material that is obtained in step 110 and that is coated with the amorphous carbon material, pump the protective gas in, perform a sintering treatment on a mixture at a high temperature, and preserve a temperature of 500°C to 1200°C for 1 to 12 hours, so as to obtain a silicon negative material whose internal layer is coated with the amorphous carbon material and whose external layer is coated with the carbon material.
(2) Pump a gas mixture of methane, a hydride gas (the hydride gas includes a doping element in the carbon material), and an inert gas in, heat the material that is obtained in step 110 and that is coated with the amorphous carbon material, so as to obtain a silicon negative material whose internal layer is coated with the amorphous carbon material and whose external layer is coated with the carbon material.

Actually, a method for preparing a second silicon negative material is extremely similar to the method for preparing the first silicon negative material, and only sequences of operation steps are different. When a first silicon negative material is being prepared, the surface of the silicon core is first coated with the amorphous carbon material, and is then coated with the carbon material; however, when a second silicon negative material is being prepared, the surface of the silicon core is first coated with the carbon material, and is then coated with the amorphous carbon material. Specific steps of the method for preparing the second silicon negative material are as follows:

210. Coat a silicon core material with the carbon material. Specifically, this step may be implemented in the following two manners:
(1) Mix the carbon material with the silicon core material, perform a sintering treatment on a mixture at a high temperature, pump a protective gas in, and preserve a temperature of 500°C to 1200°C for 1 to 12 hours, so as to obtain a material coated with the carbon material.
(2) Pump a gas mixture of methane, a hydride gas (the hydride gas includes a doping element in the carbon material), and an inert gas in, and heat the silicon core material, so as to obtain a material coated with the carbon material.

220. Mix the material that is obtained in step 210 and that is coated with the carbon material with amorphous carbon, pump the protective gas in, and perform coating and carbonization treatments on a mixture at a temperature of 400°C to 1500°C, so as to obtain a silicon negative material whose internal layer is coated with the carbon material and whose external layer is coated with the amorphous carbon material.

According to the silicon negative material preparation method provided in this embodiment of this application, by doping the surface of the silicon core with the carbon material and by using the doping element in the carbon material to form lattice defects at a carbon layer, fluidity of electrons in an electron cloud is improved, a barrier for lithium storage reaction is lowered, a quantity of binding sites for lithium storage increases, a lithium-ion migration velocity is greatly improved, and lithium storage space and a quantity of channels increase, thereby improving fast charging performance of the silicon negative material when being used as a negative electrode of a battery.

It should be understood that, when the first silicon negative material and the second silicon negative material are being prepared, all the following requirements need to be met:
The silicon core material may be at least one of pure silicon, a silicon oxide composite material, a silicon-carbon composite material, or a heteroatom-doped silicon material.

A raw material for preparing the amorphous carbon material may be at least one of asphalt, epoxy resin, or phenolic resin, or a combination thereof.

A mass of the amorphous carbon material may be 0.1% to 50% of a mass of the entire silicon negative material; or optionally, a mass of the amorphous carbon material may be 0.5% to 10% of a mass of the entire silicon negative material.

In addition to a solid phase method and a vapor deposition method, an ionic liquid method or a liquid phase method may be used to dope an element.

The doping element included in the carbon material may be at least one of the following elements: N, P, B, S, O, F, Cl, or H.

The protective gas may be a nitrogen gas, a rare gas, or another inactive gas.

If an element is doped by using the vapor deposition method, a velocity of pumping a gas mixture of a hydride including the doping element in the carbon material and the inert gas may be set to be from 5 ml/min to 300 ml/min, and a volume ratio of the hydride including the doping element to the inert gas is from 0:1 to 1:10.

The following describes in detail the silicon negative material preparation method in this embodiment of this application with reference to a specific embodiment.

Embodiment 1: Using a silicon core as a raw material to prepare a silicon negative material whose inner coating layer includes amorphous carbon and whose external coating layer includes the element N. Specific steps are as follows:
301. Mix 3.0 kg of silicon powder with a particle diameter of 200 nm, 0.3 kg of petroleum asphalt crumbled into powder with a particle diameter less than 0.1 mm, and 0.02 kg of quinoline insoluble matters together, stir evenly, and then put a mixture into a reaction kettle.
302. Subject the mixture obtained in step 301 to heating and coating treatments at 500°C for 2 hours, and then perform a carbonization treatment on the mixture at 1000°C for 4 hours under the protection of a nitrogen gas.
303. Cool a reaction product obtained in step 302 to a room temperature, so as to obtain silicon powder coated with amorphous carbon.
304. Dissolve cetyltrimethylammonium bromide (CTAB, (C16H33)N(CH3)3Br, 0.5 kg) in an HCL (8 L, 1 mol/L) solution in an ice-water bath to obtain a mixed solution A.
305. Fetch 2.0 kg of the silicon powder that is obtained in step 303 and that is coated with the amorphous carbon, put the 2.0 kg of the silicon powder into the mixed solution A, perform ultrasound dispersion for 30 minutes, and then add ammonium persulfate (APS, 0.8 kg) to the mixed solution, after which a white suspension liquid is immediately formed; and after stirring for half an hour, add a pyrrole monomer (Pyrrole, 0.5 L), and filter the white suspension liquid after the white suspension liquid reacts for 24 hours by preserving a temperature of 4°C.
306. Clean, by using a 1 mol/L HCl solution for three times, a black precipitate obtained by means of filtration in step 305, then clean the black precipitate by using purified water until a solution is colorless and neutral, and then dry the precipitate at 80°C for 12 hours.
307. Put the dry precipitate obtained in step 306 into the reaction kettle, pump an argon gas in, and perform a sintering treatment on the dry precipitate at 700°C for six hours, so as to obtain a silicon negative material whose internal coating layer includes an amorphous carbon material and whose external coating layer includes nitrogen-doped carbon.

Optionally, in step 307, when the argon gas is pumped in, hydrazine may be simultaneously pumped in. Specifically, in step 307, a gas mixture of the hydrazine and the argon gas may be pumped in, and a volume of the hydrazine is 10% of a total volume of the gas mixture. It should be understood that, when the silicon negative material is being prepared, pumping the hydrazine in is an optional step. By pumping the hydrazine in, a content of the element N doped in the carbon in the silicon negative material may further increase.

Embodiment 2: Using a silicon core as a raw material to prepare a silicon negative material whose inner coating layer includes the element N and whose external coating layer includes amorphous carbon. Specific steps are as follows:
401. Dissolve cetyltrimethylammonium bromide (CTAB, (C16H33)N(CH3)3Br, 0.5 kg) in an HCL (8 L, 1 mol/L) solution in an ice-water bath to obtain a mixed solution A.
402. Fetch 2.0 kg of silicon powder with a particle diameter of 200 nm, put the 2.0 kg of the silicon powder into the mixed solution A, perform ultrasound dispersion for 30 minutes, and then add ammonium persulfate (APS, 0.8 kg) to the mixed solution, after which a white suspension liquid is immediately formed; and after stirring for half an hour, add a pyrrole monomer (Pyrrole, 0.5 L), and filter the white suspension liquid after the white suspension liquid reacts for 24 hours by preserving a temperature of 4°C.
403. Clean, by using a 1 mol/L HCl solution for three times, a black precipitate obtained by means of filtration in step 402, then clean the black precipitate by using purified water until a solution is colorless and neutral, and then dry the precipitate at 80°C for 12 hours.
404. Put the dry precipitate obtained in step 403 into a reaction kettle, pump an argon gas in, and perform a sintering treatment on the dry precipitate at 700°C for six hours, so as to obtain silicon powder doped with nitrogen and carbon.

Optionally, in step 404, when the argon gas is pumped in, hydrazine may be simultaneously pumped in. Specifically, in step 404, a gas mixture of the hydrazine and the argon gas may be pumped in, and a volume of the hydrazine is 10% of a total volume of the gas mixture. It should be understood that, when the silicon negative material is being prepared, pumping the hydrazine in is an optional step. By pumping the hydrazine in, a content of the element N doped in the carbon in the silicon negative material may further increase.
405. Mix 1.5 kg of silicon powder that is obtained in step 404 and that is doped with nitrogen and carbon, 0.15 g of petroleum asphalt crumbled into powder with a particle diameter less than 0.1 mm, and 0.01 kg of quinoline insoluble matters together, stir evenly, and then put a mixture into the reaction kettle.
406. Subject the mixture obtained in step 405 to heating and coating treatments at 500°C for 2 hours, then perform a carbonization treatment on the mixture at 800°C for 4 hours under the protection of the nitrogen gas, and then cool a reaction product to a room temperature, so as to obtain a silicon negative material whose internal coating layer includes nitrogen-doped carbon and whose external coating layer includes the amorphous carbon.

In both Embodiment 1 and Embodiment 2, the silicon powder is used as the raw material to prepare the silicon negative material. However, actually, at least one of silicon, a silicon oxide composite material, a silicon-carbon composite material, or a heteroatom-doped silicon material may also be used to prepare the silicon negative material. The following describes in detail a silicon negative material preparation method in which the silicon and a silica composite material are used as raw materials.

Embodiment 3: Using silicon and a silica composite material as raw materials to prepare a silicon negative material whose inner coating layer includes amorphous carbon and whose external coating layer includes the element N.
501. Mix 3.0 kg of silicon, the silica composite material, 0.1 kg of petroleum asphalt crumbled into powder with a particle diameter less than 0.1 mm, and 0.2 kg of epoxy resin together, stir evenly, and then put a mixture into a reaction kettle.
502. Subject the mixture obtained in step 501 to heating and coating treatments at 600°C for 2 hours, and then perform a carbonization treatment on the mixture at 1100°C for 4 hours under the protection of a nitrogen gas.
503. Cool a reaction product obtained in step 502 to a room temperature, so as to obtain a silicon composite material coated with the amorphous carbon.
504. Put the silicon composite material that is obtained in step 503 and that is coated with the amorphous carbon into the reaction kettle, and vacuate the reaction kettle.
505. Pump an Ar-loaded gasified pyrrole monomer (5:1 v/v) in the reaction kettle to serve as a reaction gas, where a flow velocity of the Ar is 60ml/min, heat the reaction kettle to 600°C inside at a heating rate of 30°C/min, and preserve the temperature for six hours.
506. Pump 30% N₂H₄/Ar in the reaction kettle at a velocity of flow of 80ml/min, and preserve the temperature for four hours, so that the silicon negative material whose inner coating layer includes amorphous carbon and whose external coating layer includes the element N can be obtained after the reaction kettle cools down to the room temperature.

The foregoing has described in detail the silicon negative material preparation method in this embodiment of this application with reference to Embodiment 1 to Embodiment 3. The following describes how to prepare a button battery and a full battery by using the silicon negative material in this embodiment of this application.

An embodiment of this application further includes a negative electrode plate, and the negative electrode plate includes a current collector and the silicon negative material for coating the current collector in this embodiment of this application.

According to the negative electrode plate provided in this embodiment of this application, by doping a surface of a silicon core of the negative electrode plate with the carbon material and by using the doping element in the carbon material to form lattice defects at a carbon layer, fluidity of electrons in an electron cloud is improved, a barrier for lithium storage reaction is lowered, a quantity of binding sites for lithium storage increases, a lithium-ion migration velocity is greatly improved, and lithium storage space and a quantity of channels increase, thereby improving fast charging performance of the negative electrode plate.

An embodiment of this application further provides a lithium-ion battery, and the lithium-ion battery includes the negative electrode plate, a positive electrode plate, a diaphragm, a non-aqueous electrolyte solution, and a shell, where the negative electrode plate includes the current collector and the silicon negative material for coating the current collector in this embodiment of this application.

According to the lithium-ion battery provided in this embodiment of this application, by doping a surface of a silicon core of the negative electrode plate with the carbon material and by using the doping element in the carbon material to form lattice defects at a carbon layer, fluidity of electrons in an electron cloud is improved, a barrier for lithium storage reaction is lowered, a quantity of binding sites for lithium storage increases, a lithium-ion migration velocity is greatly improved, and lithium storage space and a quantity of channels increase, thereby improving fast charging performance of the lithium-ion battery.

The following briefly describes, with reference to Embodiment 4 and Embodiment 5, a method for preparing a simple button battery and a lithium-ion battery that include a negative electrode plate.

### Embodiment 4: Preparation of a button battery

A silicon negative material in this embodiment of this application is mixed with conductive carbon black and polyvinylidene fluoride in N-methylpyrrolidone at a mass ratio of 92:5:3, and then a mixture is evenly coated on a copper foil current collector, and is dried at 120°C under a vacuum condition to obtain a negative electrode plate. Then, lithium metal is used as a positive electrode plate, a solution of EC, PC and DEC (a volume ratio is 3:1:6) of 1.3 M LiPF6 is used as an electrolyte solution, and celgard C2400 is used as a diaphragm, so as to prepare the button battery in the glove box.

### Embodiment 5: Preparation of a full battery

A silicon negative material in this embodiment of this application is used to coat a current collector to prepare a negative electrode plate. Then, Lithium cobalt oxide is used as a material to prepare a positive electrode plate, a 1 mol/L LiPF6/EC+PC+DEC+EMC (a volume ratio is 1:0.3:1:1) solution is used as an electrolyte solution, and PP/PE/PP is used as a diaphragm, where a thickness of the diaphragm is 16 µm, so as to prepare a pouch battery of approximately 3Ah.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A silicon negative material, comprising a silicon core, and a buffer coating layer and a first coating layer that are coated on a surface of the silicon core, wherein the first coating layer is a coating layer comprising a carbon material, and the carbon material comprises at least one of the following doping elements: N, P, B, S, O, F, Cl, or H.

2. The silicon negative material according to claim 1, wherein the buffer coating layer is a coating layer comprising an amorphous carbon material.

3. The silicon negative material according to claim 2, wherein the amorphous carbon material and the carbon material form a dual-layer coating structure on the surface of the silicon core, the amorphous carbon material is at an internal layer of the dual-layer coating structure, and the carbon material is at an external layer of the dual-layer coating structure.

4. The silicon negative material according to claim 2, wherein the amorphous carbon material and the carbon material form a dual-layer coating structure on the surface of the silicon core, the carbon material is at an internal layer of the dual-layer coating structure, and the amorphous carbon material is at an external layer of the dual-layer coating structure.

5. The silicon negative material according to any one of claims 2 to 4, wherein a mass of the amorphous carbon material is 0.1% to 50% of a mass of the silicon negative material.

6. The silicon negative material according to any one of claims 2 to 5, wherein the silicon core comprises at least one of pure silicon, a silicon oxide composite material, a silicon-carbon composite material, or a heteroatom-doped silicon material, and the heteroatom-doped silicon material comprises at least one of the following atoms: N, P, S, B, O, F, or Cl.

7. The silicon negative material according to any one of claims 2 to 6, wherein a mass of the carbon material is 0.1% to 50% of the mass of the silicon negative material.

8. The silicon negative material according to any one of claims 2 to 7, wherein a thickness of a coating layer that comprises the amorphous carbon material and the carbon material and that is formed on the surface of the silicon core is from 0.1 to 10 microns.

9. A silicon negative material preparation method, comprising:
mixing a silicon core material with an amorphous carbon material, pumping a protective gas in, and performing coating and carbonization treatments on a mixture at 400°C to 1500°C, so as to obtain a material coated with the amorphous carbon material; and
mixing a carbon material with the material coated with the amorphous carbon material, pumping the protective gas in, performing a sintering treatment on a mixture, and then preserving a temperature of 500°C to 1200°C for 1 to 12 hours, so as to obtain a silicon negative material whose internal layer is coated with the amorphous carbon material and whose external layer is coated with the carbon material, wherein the carbon material comprises at least one of the following doping elements: N, P, B, S, O, F, Cl, or H.

10. A silicon negative material preparation method, comprising:
mixing a silicon core material with a carbon material, performing a sintering treatment on a mixture, pumping a protective gas in, and preserving a temperature of 500°C to 1200°C for 1 to 12 hours, so as to obtain a material coated with the carbon material, wherein the carbon material comprises at least one of the following doping elements: N, P, B, S, O, F, Cl, or H; and
mixing the material coated with the carbon material with an amorphous carbon material, pumping the protective gas in, and performing coating and carbonization treatments on a mixture at 400°C to 1500°C, so as to obtain a silicon negative material whose internal layer is coated with the carbon material and whose external layer is coated with the amorphous carbon material.

11. A negative electrode plate, wherein the negative electrode plate comprises a current collector and the silicon negative material that is coated on the current collector and that is provided in any one of claims 1 to 8.

12. A lithium-ion battery, wherein the lithium-ion battery comprises a negative electrode plate, a positive electrode plate, a diaphragm, a non-aqueous electrolyte solution, and a shell, and the negative electrode plate comprises a current collector and the silicon negative material that is coated on the current collector and that is provided in any one of claims 1 to 8.
